# EUROPÄISCHE PATENTSCHRIFT

(11) **EP 3 966 051 B1**
(45) Veröffentlichungstag und Bekanntmachung des Hinweises auf die Patenterteilung: **26.06.2024**
(21) Anmeldenummer: 20722525.1
(22) Anmeldetag: 24.04.2020
(51) Int. Cl.: B60G 17/052, B60G 17/019, G01L 19/06

(54) **FAHRZEUG MIT LUFTFEDERANLAGE**
VEHICLE WITH AN AIR SUSPENSION SYSTEM
VÉHICULE AVEC UN SYSTÈME DE SUSPENSION

(30) Priorität: 10.05.2019 DE 102019112215
(43) Veröffentlichungstag der Anmeldung: 16.03.2022
(73) Patentinhaber: ZF CV Systems Europe BV, 1170 Brussels (BE)
(72) Erfinder: AKCAM, Halil, 30161 Hannover (DE); JERMIS, Sebastian, 30171 Hannover (DE)
(74) Vertreter: Ohlendorf, Henrike
(86) Internationale Anmeldenummer: PCT/EP2020/061431
(87) Internationale Veröffentlichungsnummer: WO 2020/229138

(56) Entgegenhaltungen:
- EP-A2- 0 170 794
- DE-A1-102005 013 914
- DE-C2- 19 546 324
- US-A1- 2013 206 255

## Beschreibung

Die Erfindung betrifft ein Fahrzeug mit einer Luftfederungsanlage.

Die Luftfederungsanlage eines Fahrzeugs weist üblicherweise für Luftfedern einer Fahrzeugachse oder mehrerer benachbarter Tandemachsen jeweils ein bevorzugt als ein 3/2-Wege-Magnetschaltventil ausgebildetes Umschaltventil und für die Luftfeder jedes Fahrzeugrades der Fahrzeugachse beziehungsweise für die Luftfedern jeder Fahrzeugseite der Tandemachsen jeweils ein bevorzugt als ein 2/2-Wege-Magnetschaltventil ausgebildetes Absperrventil auf. Über das Umschaltventil ist eine Arbeitsdruckleitung wechselweise mit einem Entlüftungsausgang oder einer druckführenden Vorratsleitung verbindbar. An die Arbeitsdruckleitung sind, zum Beispiel mittels eines T-Leitungsstücks, die beiden Absperrventile angeschlossen, über die jeweils eine zu dem Federbalg der zugeordneten Luftfeder beziehungsweise zu den Federbälgen der zugeordneten Luftfedern führende Anschlussleitung wechselweise mit der Arbeitsdruckleitung verbindbar oder gegenüber dieser absperrbar ist.

Im unbetätigten, also unbestromten Zustand des Umschaltventils ist die Arbeitsdruckleitung mit dem Entlüftungsausgang verbunden und somit drucklos. Im betätigten, also bestromten Zustand des Umschaltventils ist die Arbeitsdruckleitung mit der Vorratsleitung verbunden und steht somit unter einem von einer Druckluftanlage zur Verfügung gestellten Vorratsdruck. Im unbetätigten, also unbestromten Zustand der Absperrventile sind diese jeweils geschlossen und die Anschlussleitungen gegenüber der Arbeitsdruckleitung abgesperrt. Zur Absenkung des Balgdruckes in dem Federbalg der zugeordneten Luftfeder beziehungsweise in den Federbälgen der zugeordneten Luftfedern ist nur das Öffnen des betreffenden Absperrventils erforderlich, wodurch der jeweilige Federbalg entlüftet wird beziehungsweise die jeweiligen Federbälge entlüftet werden. Zur Erhöhung des Balgdruckes in dem Federbalg der zugeordneten Luftfeder beziehungsweise in den Federbälgen der zugeordneten Luftfedern ist dagegen das Umschalten des Umschaltventils und das Öffnen des betreffenden Absperrventils erforderlich, wodurch der jeweilige Federbalg belüftet wird beziehungsweise die jeweiligen Federbälge belüftet werden.

Zur Ermittlung der Höhe beziehungsweise des Niveaus des Fahrzeugaufbaus gegenüber einer Fahrzeugachse ist an jeder Fahrzeugachse beziehungsweise bei benachbarten Tandemachsen zumindest an einer der Tandemachsen beidseitig jeweils ein Höhen- oder Niveausensor angeordnet, der über eine Sensorleitung mit einem elektronischen Steuergerät verbunden ist. Zur Ermittlung der Balgdrücke in den Federbälgen der Luftfedern ist an die Anschlussleitung jedes Federbalgs einer Fahrzeugachse beziehungsweise bei Tandemachsen der Federbälge einer Fahrzeugseite ein Drucksensor angeschlossen, der über eine Sensorleitung mit dem elektronischen Steuergerät verbunden ist. Abhängig von den Sensorsignalen der Höhensensoren und der Drucksensoren sowie von einem Steuerungsprogramm vorgegebenen oder manuell durch einen Fahrer eingegebenen Solldaten werden die Umschalt- und Absperrventile von dem elektronischen Steuergerät über elektrische Steuerleitungen angesteuert, um durch die Belüftung oder Entlüftung der Federbälge der betreffenden Luftfedern eine vorgegebene Höhe des Fahrzeugaufbaus beizubehalten oder einzustellen.

Die Drucksensoren können unmittelbar benachbart zu den Luftfedern an die jeweilige Anschlussleitung angeschlossen sein. Dies hat den Vorteil, dass der jeweilige Balgdruck in dem Federbalg der benachbarten Luftfeder auch bei dynamischen Druckänderungen weitgehend unverfälscht messbar ist. Nachteilig an einer derartigen dezentralen Anordnung der Drucksensoren sind jedoch die erforderlichen langen Sensorleitungen, der erhöhte Montageaufwand und die Beaufschlagung der Drucksensoren sowie ihrer elektrischen Stecker mit Schmutz und Spritzwasser. Eine dezentrale Anordnung der Drucksensoren nahe den Luftfedern ist beispielsweise von einer in der DE 36 38 849 A1 beschriebenen Luftfederungsanlage bekannt.

Alternativ dazu können die Drucksensoren auch entfernt von den Luftfedern in oder an dem jeweiligen Ventilblock angeordnet und am Ausgang des zugeordneten Absperrventils an die Anschlussleitung angeschlossen sein. Vorteilhaft an einer derartigen zentralen Anordnung der Drucksensoren sind die erforderlichen kurzen Sensorleitungen, der geringere Montageaufwand und die vor Schmutz und Spritzwasser weitgehend geschützte Lage der Drucksensoren und ihrer elektrischen Stecker. Diese von den Luftfedern entfernte Anordnung hat jedoch den Nachteil, dass der jeweilige Balgdruck in dem Federbalg der benachbarten Luftfeder, insbesondere während der dynamischen Druckänderungen beim Öffnen und Schließen des zugeordneten Absperrventils, von den Drucksensoren verfälscht erfasst wird. Eine zentrale Anordnung der Drucksensoren in einem neben den Steuerventilen auch ein elektronisches Steuergerät umfassenden Steuerblock einer Luftfederungsanlage ist beispielsweise aus der DE 195 46 324 C2 bekannt. Eine weitere Luftfederungseinrichtung für Fahrzeuge mit Druckmesseinrichtungen für eine Messung von Drücken an Luftfedern ist aus der EP 0 170 794 A2 bekannt.

DE 10 2005 013 914 A1 offenbart eine Vorrichtung zur Druckmessung bei einem strömenden Gas, wobei das Gas korrosiv ist. Ein Drucksensor ist in einem Gehäuse angeordnet und mittels eines Schutzgels gegen das Gas geschützt, wobei das Gehäuse über eine Druckleitung mit das strömende Gas führenden Mitteln verbunden ist. Die Vorrichtung soll bei einer Druckmessung in Abgasen zum Einsatz kommen, die eine pulsierende Strömung aufweisen. Solche Strömungspulse führen zu einem erhöhten Gastransport in Richtung zu dem Drucksensor, der dadurch in erhöhtem Maße einer korrodierenden Wirkung des Gases ausgesetzt wird. Dies wird dadurch vermindert, dass ein pneumatischer Tiefpass in der Druckleitung ausgebildet ist, dessen Grenzfrequenz geringer als eine Pulsationsfrequenz des Gasstroms ist.

US 2013/206255 A1 offenbart einen hydraulischen Tiefpassfilter für einen Drucksensor. Da eine genaue Steuerung der Belüftung und Entlüftung der Federbälge anhand der sensorisch erfassten Luftdrücke bislang nicht möglich ist, lag der Erfindung die Aufgabe zugrunde, eine Sensoranordnung einer Luftfederungsanlage eines Fahrzeugs der eingangs genannten Bauart vorzustellen, mit welcher der Balgdruck in den Federbälgen der Luftfedern dennoch exakt ermittelt werden kann.

Diese Aufgabe ist durch eine Sensoranordnung mit den Merkmalen des Anspruchs 1 gelöst. Vorteilhafte Weiterbildungen dieses Verfahrens sind in den abhängigen Ansprüchen definiert.

### Demnach betrifft die Erfindung

ein Fahrzeug mit einer Luftfederungsanlage, wobei das Fahrzeug eine Fahrzeugachse mit Fahrzeugrädern oder mehrere benachbarte Tandemachsen aufweist. Die Luftfederungsanlage weist hierbei Luftfedern mit jeweils einem Federbalg an jeweils einem Fahrzeugrad an der Fahrzeugachse oder an jeweils einer Fahrzeugseite des Fahrzeugs an den Tandemachsen auf, wobei die Luftfederungsanlage für die Luftfedern der Fahrzeugachse oder der Tandemachsen jeweils ein Umschaltventil sowie für die Luftfeder jedes Fahrzeugrades der Fahrzeugachse beziehungsweise für die Luftfedern jeder Fahrzeugseite der Tandemachsen jeweils ein Absperrventil aufweist. Das jeweilige Umschaltventil sowie die Absperrventile sind in einem entfernt von den Luftfedern angeordneten Ventilblock baulich zusammengefasst, wobei die Luftfederungsanlage für die Messung der Balgdrücke in den Federbälgen der Luftfedern jeweils einen Drucksensor aufweist, welche in oder an dem Ventilblock angeordnet sind. Hierbei sind die Drucksensoren jeweils am Ausgang des ihnen zugeordneten Absperrventils an eine Anschlussleitung des Federbalgs der zugeordneten Luftfeder beziehungsweise der Federbälge der zugeordneten Luftfedern angeschlossen.

Gemäß der Erfindung ist vorgesehen, dass die Drucksensoren jeweils über eine als Tiefpassfilter wirksame Filteranordnung an die Anschlussleitung des Federbalgs der zugeordneten Luftfeder beziehungsweise der Federbälge der zugeordneten Luftfedern angeschlossen sind. Durch den Anschluss der Drucksensoren über jeweils eine als Tiefpassfilter wirksame Filteranordnung an die Anschlussleitung des Federbalgs der zugeordneten Luftfeder beziehungsweise der Federbälge der zugeordneten Luftfedern werden die insbesondere durch das Öffnen und Schließen des zugeordneten Absperrventils auftretenden Druckspitzen und Druckschwankungen derart gedämpft und ausgefiltert, dass die über die angeschlossenen Drucksensoren erfassten Luftdrücke p_{S} weitgehend den Balgdrücken p_{B} in den Federbälgen der zugeordneten Luftfedern entsprechen (p_{S} = p_{B}).

Die Filteranordnungen bestehen jeweils bevorzugt aus einer Drossel und einem kleineren Druckbehälter, die jeweils seriell zwischen der zugeordneten Anschlussleitung und dem betreffenden Drucksensor angeordnet sind. Das Volumen der Druckbehälter ist kleiner ist als das kleinstmögliche Volumen der jeweils zugeordneten Federbälge.

Um eine genaue Anpassung der Filteranordnungen an die Abmessungen der jeweiligen Anschlussleitung und des Federbalgs der zugeordneten Luftfeder beziehungsweise der Federbälge der zugeordneten Luftfedern vornehmen zu können, sind die Drossein der Filteranordnungen hinsichtlich ihres Öffnungsquerschnittes bevorzugt einstellbar ausgebildet.

Um die gewünschte Wirkung als Tiefpassfilter zu erzielen ist bevorzugt vorgesehen, dass die Drossel und der Druckbehälter der Filteranordnungen jeweils derart dimensioniert sind, dass das Verhältnis aus dem Quadrat des größtmöglichen Öffnungsdurchmessers d_{DR_max} der Drossel und dem Volumen V_{DB} des Druckbehälters mindestens so groß ist wie das Verhältnis aus dem Quadrat des Leitungsdurchmessers d_{AL} der zugeordneten Anschlussleitung und dem kleinstmöglichen Volumen V_{B_min} des Federbalgs der zugeordneten Luftfeder beziehungsweise der Federbälge der zugeordneten Luftfedern (d_{DR_max}² / V_{DB} ≥ d_{AL}² / V_{B_min}).

Die Erfindung wird nachstehend anhand eines in der beigefügten Zeichnung dargestellten Ausführungsbeispiels näher erläutert. In der Zeichnung zeigt
Fig. 1 eine Luftfederungsanlage für eine Fahrzeugachse eines Fahrzeugs mit einer zentralen Anordnung von Drucksensoren in einer schematischen Ansicht,
Fig. 2 die Druckverläufe des Balgdruckes eines Federbalgs und des von einem Drucksensor erfassten Druckes während eines Belüftungsvorgangs in einem Diagramm, und
Fig. 3 eine Luftfederungsanlage für eine Fahrzeugachse eines Fahrzeugs mit einer erfindungsgemäßen Sensoranordnung in einer schematischen Ansicht.

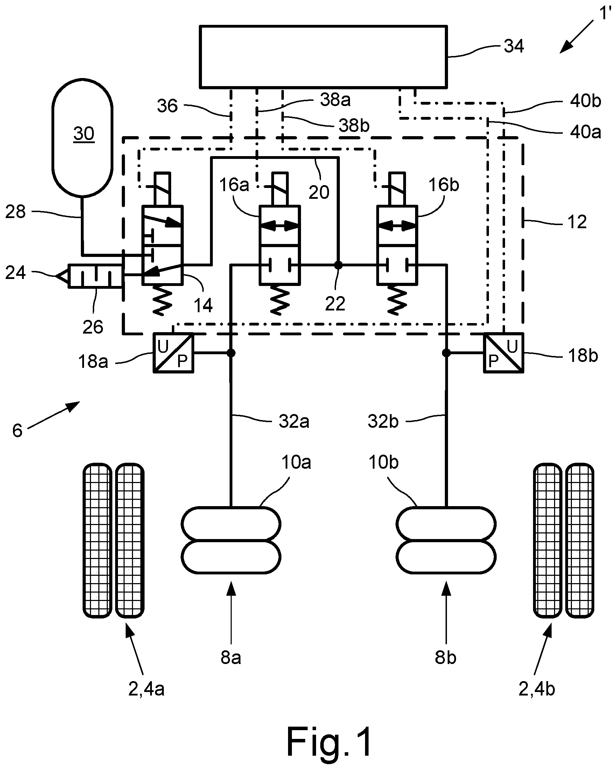

Eine in Fig. 1 schematisch abgebildete Luftfederungsanlage 6 für eine Fahrzeugachse 2 eines Fahrzeugs umfasst jeweils eine Luftfeder 8a, 8b mit einem Federbalg 10a, 10b pro Fahrzeugrad 4a, 4b der Fahrzeugachse 2, einen Ventilblock 12 mit einem als ein 3/2-Wege-Magnetschaltventil ausgebildeten Umschaltventil 14, jeweils einem als ein 2/2-Wege-Magnetschaltventil ausgebildeten Absperrventil 16a, 16b für die Luftfeder 8a, 8b jedes Fahrzeugrades 4a, 4b sowie jeweils einen Drucksensor 18a, 18b für die Messung des Balgdruckes in jedem der Federbälge 10a, 10b der Luftfedern 8a, 8b. Die Drucksensoren 18a, 18b sind dabei Druck-Spannungs-Sensoren und bilden eine Sensoranordnung 1'.

Mittels des Umschaltventils 14, welches über eine elektrische Steuerleitung 36 mit einem elektronischen Steuergerät 34 in Verbindung steht, ist eine Arbeitsdruckleitung 20 wechselweise mit einem mit einem Schalldämpfer 26 versehenen Entlüftungsausgang 24 oder einer druckführenden Vorratsleitung 28 verbindbar. An die Vorratsleitung 28 ist ein Speicherbehälter 30 angeschlossen, in dem Druckluft unter einem Vorratsdruck gespeichert ist. Über die beiden Absperrventile 16a, 16b, die eingangsseitig über ein T-Stück 22 an die Arbeitsdruckleitung 20 angeschlossen sind und jeweils über eine elektrische Steuerleitung 38a, 38b mit dem elektronischen Steuergerät 34 signaltechnisch in Verbindung sind, ist jeweils eine zu dem Federbalg 10a, 10b der zugeordneten Luftfeder 8a, 8b führende Anschlussleitung 32a, 32b wechselweise mit der Arbeitsdruckleitung 20 verbindbar oder gegenüber dieser absperrbar.

Im unbetätigten, also unbestromten Zustand des Umschaltventils 14 ist die Arbeitsdruckleitung 20 mit dem Entlüftungsausgang 24 verbunden und somit drucklos. Im betätigten, also bestromten Zustand des Umschaltventils 14 ist die Arbeitsdruckleitung 20 mit der Vorratsleitung 28 verbunden und steht somit unter dem Vorratsdruck des Speicherbehälters 30.

Im unbetätigten, also unbestromten Zustand der Absperrventile 16a, 16b sind diese jeweils geschlossen und die Anschlussleitungen 32a, 32b gegenüber der Arbeitsdruckleitung 20 abgesperrt. Zur Absenkung des Balgdruckes in dem Federbalg 10a, 10b der zugeordneten Luftfeder 8a, 8b ist nur das Öffnen des betreffenden Absperrventils 16a, 16b erforderlich, wodurch der jeweilige Federbalg 10a, 10b entlüftet wird. Zur Erhöhung des Balgdruckes in dem Federbalg 10a, 10b der zugeordneten Luftfeder 8a, 8b ist dagegen das Umschalten des Umschaltventils 14 und das Öffnen des betreffenden Absperrventils 16a, 16b erforderlich, wodurch der jeweilige Federbalg 10a, 10b belüftet wird.

Die Drucksensoren 18a, 18b sind in oder an dem Ventilblock 12 angeordnet und jeweils am Ausgang des zugeordneten Absperrventils 16a, 16b an die Anschlussleitung 32a, 32b des Federbalgs 10a, 10b der zugeordneten Luftfeder 8a, 8b angeschlossen. Die Drucksensoren 18a, 18b stehen über jeweils eine elektrische Sensorleitung 40a, 40b mit dem elektronischen Steuergerät 34 in Verbindung.

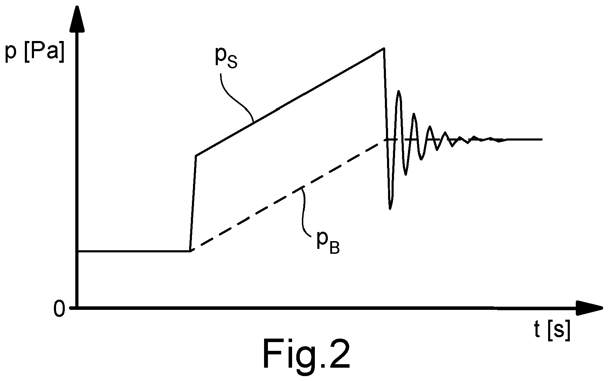

Wie in dem Diagramm der Fig. 2 beispielhaft für eine Belüftung des Federbalgs 10a, 10b einer Luftfeder 8a, 8b veranschaulicht ist, weichen der in dem betreffenden Federbalg 10a, 10b vorliegende Balgdruck p_{B} und der von dem zugeordneten Drucksensor 18a, 18b erfasste, am Ausgang des zugeordneten Absperrventils 16a, 16b vorliegende Luftdruck p_{S} während des Belüftungsvorgangs relativ stark voneinander ab, da sich durch das Öffnen und Schließen des betreffenden Absperrventils 16a, 16b an dessen Ausgang Druckspitzen und Druckschwingungen einstellen. Eine genaue Steuerung der Belüftung und Entlüftung der Federbälge 10a, 10b anhand der sensorisch erfassten Luftdrücke p_{S} ist mit der Sensoranordnung 1' gemäß Fig. 1 somit bislang nicht möglich.

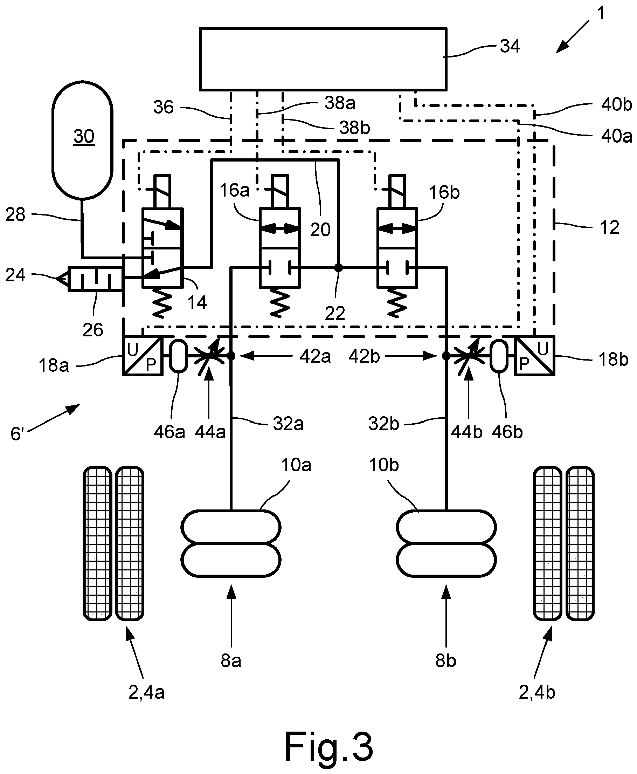

Zur Lösung dieses Problems ist eine erfindungsgemäße Sensoranordnung 1 vorgesehen, welche in der schematischen Abbildung einer entsprechenden Luftfederungsanlage 6' für eine Fahrzeugachse 2 eines Fahrzeugs in Fig. 3 dargestellt ist. Die Drucksensoren 18a, 18b sind nun jeweils über eine als Tiefpassfilter wirksame Filteranordnung 42a, 42b an die Anschlussleitung 32a, 32b des Federbalgs 10a, 10b der zugeordneten Luftfeder 8a, 8b angeschlossen. Die Filteranordnungen 42a, 42b bestehen jeweils aus einer pneumatischen Drossel 44a, 44b und einem kleineren Druckbehälter 46a, 46b, die jeweils seriell zwischen der zugeordneten Anschlussleitung 32a, 32b und dem betreffenden Drucksensor 18a, 18b angeordnet sind. Das Volumen der jeweiligen Druckbehälter 46a, 46b ist dabei kleiner als das kleinstmöglich einstellbare Volumen der jeweils zugeordneten Federbälge 10a, 10b.

Durch den Anschluss der Drucksensoren 18a, 18b über jeweils eine als Tiefpassfilter wirksame Filteranordnung 42a, 42b an die Anschlussleitung 32a, 32b des Federbalgs 10a, 10b der zugeordneten Luftfeder 8a, 8b werden die insbesondere durch das Öffnen und Schließen des zugeordneten Absperrventils 16a, 16b auftretenden Druckspitzen und Druckschwankungen derart gedämpft und ausgefiltert, dass die über die angeschlossenen Drucksensoren 18a, 18b gemessenen Luftdrücke p_{S} weitgehend den Balgdrücken p_{B} in den Federbälgen 10a, 10b der zugeordneten Luftfedern 8a, 8b ent

Die Drosseln 44a, 44b der Filteranordnungen 42a, 42b sind hinsichtlich ihres Öffnungsquerschnittes justierbar ausgebildet, so dass eine genaue Anpassung der Filteranordnungen 42a, 42b an die Abmessungen der jeweiligen Anschlussleitung 32a, 32b und des Federbalgs 10a, 10b der zugeordneten Luftfeder 8a, 8b möglich ist. Um die gewünschte Wirkung als Tiefpassfilter zu erzielen, sind die Drossel 44a, 44b und der Druckbehälter 46a, 46b der Filteranordnungen 42a, 42b jeweils derart dimensioniert, dass das Verhältnis aus dem Quadrat des größtmöglichen Öffnungsdurchmessers d_{DR_max} der Drossel 44a, 44b und dem Volumen V_{DB} des Druckbehälters 46a, 46b mindestens so groß ist wie das Verhältnis aus dem Quadrat des Leitungsdurchmessers d_{AL} der zugeordneten Anschlussleitung 32a, 32b und dem kleinstmöglichen Volumen V_{B_min} des Federbalgs 10a, 10b der zugeordneten Luftfeder 8a, 8b (d_{DR_max}² / V_{DB} ≥ d_{AL}² / V_{B_min}).

### Bezugszeichenliste (Teil der Beschreibung)

- 1: Sensoranordnung (erfindungsgemäß)
- 1': Sensoranordnung
- 2: Fahrzeugachse
- 4a, 4b: Fahrzeugräder
- 6, 6': Luftfederungsanlagen
- 8a, 8b: Luftfedern
- 10a, 10b: Federbälge
- 12: Ventilblock
- 14: Umschaltventil
- 16a, 16b: Absperrventile
- 18a, 18b: Drucksensoren
- 20: Arbeitsdruckleitung
- 22: T-Stück
- 24: Entlüftungsausgang
- 26: Schalldämpfer
- 28: Vorratsleitung
- 30: Speicherbehälter
- 32a, 32b: Anschlussleitung
- 34: Elektronisches Steuergerät
- 36: Steuerleitung
- 38a, 38b: Steuerleitung
- 40a, 40b: Sensorleitung
- 42a, 42b: Filteranordnung
- 44a, 44b: Drossel
- 46a, 46b: Druckbehälter
- d: Durchmesser
- d_{AL}: Durchmesser der Anschlussleitung
- d_{DR}: Öffnungsdurchmesser der Drossel
- d_{DR_max}: Größtmöglicher Öffnungsdurchmesser der Drossel
- p: Druck
- p_{B}: Balgdruck
- p_{S}: Sensorisch erfasster Luftdruck
- V: Volumen
- V_{B}: Volumen des Federbalgs beziehungsweise der Federbälge
- V_{B_min}: Kleinstmögliches Volumen des Federbalgs bzw. der Federbälge
- V_{DB}: Volumen des Druckbehälters

## Patentansprüche

1. Fahrzeug mit einer Luftfederungsanlage (6'), wobei das Fahrzeug
- eine Fahrzeugachse (2) mit Fahrzeugrädern (4a, 4b) oder
- mehrere benachbarte Tandemachsen aufweist,
wobei
- die Luftfederungsanlage (6') Luftfedern (8a, 8b) mit jeweils einem Federbalg (10a, 10b) an jeweils einem Fahrzeugrad (4a, 4b) an der Fahrzeugachse (2) oder an jeweils einer Fahrzeugseite des Fahrzeugs an den Tandemachsen aufweist,
- die Luftfederungsanlage (6')
- für die Luftfedern (8a, 8b) der Fahrzeugachse (2) oder der Tandemachsen jeweils ein Umschaltventil (14) sowie
- für die Luftfeder (8a, 8b) jedes Fahrzeugrades (4a, 4b) der Fahrzeugachse (2) beziehungsweise für die Luftfedern jeder Fahrzeugseite der Tandemachsen jeweils ein Absperrventil (16a, 16b) aufweist,
- das jeweilige Umschaltventil (14) sowie die Absperrventile (16a, 16b) in einem entfernt von den Luftfedern (8a, 8b) angeordneten Ventilblock (12) baulich zusammengefasst sind,
- die Luftfederungsanlage (6') für die Messung der Balgdrücke in den Federbälgen (10a, 10b) der Luftfedern (8a, 8b) jeweils einen Drucksensor (18a, 18b) aufweist, welche in oder an dem Ventilblock (12) angeordnet sind, und
- die Drucksensoren (18a, 18b) jeweils am Ausgang des ihnen zugeordneten Absperrventils (16a, 16b) an eine Anschlussleitung (32a, 32b) des Federbalgs (10a, 10b) der zugeordneten Luftfeder (8a, 8b) beziehungsweise der Federbälge der zugeordneten Luftfedern angeschlossen sind,
**dadurch gekennzeichnet, dass** die Drucksensoren (18a, 18b) jeweils über eine als Tiefpassfilter wirksame Filteranordnung (42a, 42b) an die Anschlussleitung (32a, 32b) des Federbalgs (10a, 10b) der zugeordneten Luftfeder (8a, 8b) beziehungsweise der Federbälge der zugeordneten Luftfedern angeschlossen sind.

2. Fahrzeug nach Anspruch 1, **dadurch gekennzeichnet, dass** die Filteranordnungen (42a, 42b) jeweils aus einer Drossel (44a, 44b) und einem Druckbehälter (46a, 46b) bestehen, die jeweils seriell zwischen der zugeordneten Anschlussleitung (32a, 32b) und dem betreffenden Drucksensor (18a, 18b) angeordnet sind.

3. Fahrzeug nach Anspruch 2, **dadurch gekennzeichnet, dass** das Volumen der Druckbehälter (46a, 46b) kleiner ist als das kleinstmögliche Volumen der jeweils zugeordneten Federbälge (10a, 10b).

4. Fahrzeug nach einem der Ansprüche 2 bis 3, **dadurch gekennzeichnet, dass** die Drosseln (44a, 44b) der Filteranordnungen (42a, 42b) hinsichtlich ihres Öffnungsquerschnittes einstellbar ausgebildet sind.

5. Fahrzeug nach einem der Ansprüche 2 bis 4, **dadurch gekennzeichnet, dass** die Drossel (44a, 44b) und der Druckbehälter (46a, 46b) der Filteranordnungen (42a, 42b) jeweils derart dimensioniert sind, dass das Verhältnis aus dem Quadrat des größtmöglichen Öffnungsdurchmessers (d_{DR_max}) der Drossel (44a, 44b) und dem Volumen (V_{DB}) des Druckbehälters (46a, 46b) mindestens so groß ist wie das Verhältnis aus dem Quadrat des Leitungsdurchmessers (d_{AL}) der zugeordneten Anschlussleitung (32a, 32b) und dem kleinstmöglichen Volumen (V_{B_min}) des Federbalgs (10a, 10b) der zugeordneten Luftfeder (8a, 8b) beziehungsweise der Federbälge der zugeordneten Luftfedern (d_{DR_max}² / V_{DB} ≥ d_{AL}² / V_{B_min}).

## Claims

1. Vehicle comprising an air suspension system (6'), the vehicle having
- a vehicle axle (2) having vehicle wheels (4a, 4b) or
- a plurality of adjacent tandem axles,
- the air suspension system (6') having air springs (8a, 8b), each having a spring bellows (10a, 10b), on each vehicle wheel (4a, 4b) on the vehicle axle (2) or on each vehicle side of the vehicle on the tandem axles,
- the air suspension system (6') having
- a changeover valve (14) for each of the air springs (8a, 8b) of the vehicle axle (2) or of the tandem axles and
- a shutoff valve (16a, 16b) for each of the air springs (8a, 8b) of each vehicle wheel (4a, 4b) of the vehicle axle (2) or for each of the air springs of each vehicle side of the tandem axles,
- each changeover valve (14) and the shutoff valves (16a, 16b) being structurally combined in a valve block (12) which is arranged remotely from the air springs (8a, 8b),
- the air suspension system (6') having in each case a pressure sensor (18a, 18b) for measuring the bellows pressures in the spring bellows (10a, 10b) of the air springs (8a, 8b), which pressure sensors are arranged in or on the valve block (12), and
- the pressure sensors (18a, 18b) each being connected to a connection line (32a, 32b) of the spring bellows (10a, 10b) of the associated air spring (8a, 8b) or the spring bellows of the associated air springs at the output of the shutoff valve (16a, 16b) associated therewith,
**characterized in that** the pressure sensors (18a, 18b) are each connected via a filter assembly (42a, 42b) acting as a low-pass filter to the connection line (32a, 32b) of the spring bellows (10a, 10b) of the associated air spring (8a, 8b) or the spring bellows of the associated air springs.

2. Vehicle according to claim 1, **characterized in that** the filter assemblies (42a, 42b) each consist of a throttle (44a, 44b) and a pressure container (46a, 46b) which are each arranged in series between the associated connection line (32a, 32b) and the corresponding pressure sensor (18a, 18b).

3. Vehicle according to claim 2, **characterized in that** the volume of the pressure containers (46a, 46b) is smaller than the smallest possible volume of the respectively associated spring bellows (10a, 10b).

4. Vehicle according to either claim 2 or claim 3, **characterized in that** the throttles (44a, 44b) of the filter assemblies (42a, 42b) are designed to be adjustable with regard to their opening cross-section.

5. Vehicle according to any of claims 2 to 4, **characterized in that** the throttle (44a, 44b) and the pressure container (46a, 46b) of the filter assemblies (42a, 42b) are each dimensioned such that the ratio of the square of the greatest possible opening diameter (d_{DR_max}) of the throttle (44a, 44b) and the volume (V_{DB}) of the pressure container (46a, 46b) is at least as large as the ratio of the square of the line diameter (d_{AL}) of the associated connection line (32a, 32b) and the smallest possible volume (V_{B_min}) of the spring bellows (10a, 10b) of the associated air spring (8a, 8b) or the spring bellows of the associated air springs (d_{DR_max}² / V_{DB} > d_{AL}² / V_{B_min}).

## Revendications

1. Véhicule comportant une suspension pneumatique (6'), dans lequel le véhicule présente
- un essieu de véhicule (2) comportant des roues de véhicule (4a, 4b) ou
- plusieurs essieux tandem adjacents,
dans lequel
- la suspension pneumatique (6') présente des ressorts pneumatiques (8a, 8b) comportant respectivement un soufflet à ressort (10a, 10b) respectivement sur une roue de véhicule (4a, 4b) sur l'essieu de véhicule (2) ou respectivement sur un côté de véhicule du véhicule sur les essieux tandem,
- la suspension pneumatique (6') présente
- respectivement une soupape d'inversion (14) pour les ressorts pneumatiques (8a, 8b) de l'essieu de véhicule (2) ou des essieux tandem, ainsi que
- respectivement une soupape d'arrêt (16a, 16b) pour les ressorts pneumatiques (8a, 8b) de chaque roue de véhicule (4a, 4b) de l'essieu de véhicule (2) ou pour les ressorts pneumatiques de chaque côté de véhicule des essieux tandem,
- la soupape d'inversion (14) respective ainsi que les soupapes d'arrêt (16a, 16b) sont structurellement regroupées dans un bloc de soupapes (12) disposé à distance des ressorts pneumatiques (8a, 8b),
- la suspension pneumatique (6') présente respectivement un capteur de pression (18a, 18b) pour la mesure des pressions de soufflet dans les soufflets à ressort (10a, 10b) des ressorts pneumatiques (8a, 8b), lesquels capteurs de pression sont disposés dans ou sur le bloc de soupapes (12), et
- les capteurs de pression (18a, 18b) sont respectivement raccordés, à la sortie de la soupape d'arrêt (16a, 16b) qui est associée à ceux-ci, à une conduite de raccordement (32a, 32b) du soufflet à ressort (10a, 10b) des ressorts pneumatiques (8a, 8b) associés ou des soufflets à ressort des ressorts pneumatiques associés,
**caractérisé en ce que** les capteurs de pression (18a, 18b) sont respectivement raccordés, par l'intermédiaire d'un agencement formant filtre (42a, 42b) fonctionnant comme un filtre passe-bas, à la conduite de raccordement (32a, 32b) du soufflet à ressort (10a, 10b) des ressorts pneumatiques (8a, 8b) associés ou des soufflets à ressort des ressorts pneumatiques associés.

2. Véhicule selon la revendication 1, **caractérisé en ce que** les agencements formant filtres (42a, 42b) sont constitués respectivement d'un étrangleur (44a, 44b) et d'un réservoir sous pression (46a, 46b), lesquels sont respectivement disposés en série entre la conduite de raccordement (32a, 32b) associée et le capteur de pression (18a, 18b) concerné.

3. Véhicule selon la revendication 2, **caractérisé en ce que** le volume des réservoirs sous pression (46a, 46b) est inférieur au plus petit volume possible des soufflets à ressort (10a, 10b) associés respectivement.

4. Véhicule selon l'une des revendications 2 à 3, **caractérisé en ce que** les étrangleurs (44a, 44b) des agencements formant filtres (42a, 42b) sont conçus de manière à pouvoir être réglés en ce qui concerne leur section transversale d'ouverture.

5. Véhicule selon l'une des revendications 2 à 4, **caractérisé en ce que** l'étrangleur (44a, 44b) et le réservoir sous pression (46a, 46b) des agencements formant filtres (42a, 42b) sont respectivement dimensionnés de sorte que le rapport entre le carré du diamètre d'ouverture le plus grand possible (d_{DR_max}) de l'étrangleur (44a, 44b) et le volume (V_{DB}) du réservoir sous pression (46a, 46b) est au moins égal au rapport entre le carré du diamètre de conduite (d_{AL}) de la conduite de raccordement (32a, 32b) associée et le volume (V_{B_min}) le plus petit possible du soufflet à ressort (10a, 10b) du ressort pneumatique (8a, 8b) associé ou des soufflets à ressort des ressorts pneumatiques(d_{DR_max}² / V_{DB} > d_{AL}² / V_{B}_ₘᵢₙ) associés.
